# EUROPEAN PATENT APPLICATION

(11) **EP 4 249 304 A1**
(43) Date of publication of application: **27.09.2023**
(21) Application number: 21894985.7
(22) Date of filing: 09.11.2021
(51) Int. Cl.: B60K 17/04, B60K 17/22, B60K 7/00, F16H 1/32

(54) **POWER TRANSMISSION APPARATUS**

(30) Priority: 19.11.2020 KR 20200156000; 28.07.2021 KR 20210099295
(71) Applicant: C-Stone Technologies Co., Ltd, Suwon-si, Gyeonggi-do 16229 (KR); Park, Dong-Hoon, Seongnam-si, Gyeonggi-do 13600 (KR)
(72) Inventor: MIN, June Ki, Suwon-si, Gyeonggi-do 16229 (KR); PARK, Dong-Hoon, Seongnam-si, Gyeonggi-do 13600 (KR)
(74) Representative: Maikowski & Ninnemann Patentanwälte Partnerschaft mbB
(86) International application number: PCT/KR2021/016216
(87) International publication number: WO 2022/108214

(57) **Abstract**

A power transmission device is disclosed.

The power transmission device may include a power portion including a power generating portion including a power source generating power, and a fixing portion extending from the power generating portion in an axial direction, a driving member operatively connected to the power source and including a driving gear, a driven member including a driven gear engaged with the driving gear, a rotating member coupled to the driven member and rotating with the driven member, and an output member having a rotating wheel mounted thereon, defining an axial width, coupled to the rotating member, and rotating with the rotating member, the power source may include a power source shaft, and the power source shaft may be disposed in a range of -25 ° to 25 ° with respect to a radial direction of a rotating wheel.

## Description

### [Technical Field]

The present invention relates to a power transmission device, and more particularly, to a power transmission device that may be used in a wheel drive unit, etc.

### [Background Art]

Due to recently strengthened environmental regulations and fuel economy regulations, the use of eco-friendly vehicles such as hybrid vehicles and electric vehicles is increasing. An eco-friendly vehicle includes an electric motor as a power source, and various types of eco-friendly vehicles may be implemented according to the arrangement of an electric motor and a reducer.

One of various power source arrangement methods of an eco-friendly vehicle is a wheel driving device in which a power source is arranged in or near a wheel hub. The wheel drive unit of the related art has a large size so that a part of the wheel drive unit protrudes to the outside of the wheel hub, and the part of the wheel drive unit that protrudes to the outside of the wheel hub may cause interference with vehicle parts such as a suspension device or a brake device. Accordingly, in order to mount the wheel drive unit of the related art to a vehicle, a design change of a vehicle body or a chassis is required.

In order to solve this problem, an in-wheel motor system has been developed. An in-wheel motor system is a system in which an electric motor that is a power source and a reducer are arranged in a wheel hub. According to the in-wheel motor system of the related art, a planetary gear set is mainly used as a reducer, but it is difficult to arrange the electric motor, the planetary gear set, and a wheel bearing in the wheel hub. Accordingly, an in-wheel motor system that does not include a reducer has been developed.

However, the in-wheel motor system that does not include a reducer requires a large-capacity electric motor because it starts the vehicle with the power of the electric motor itself and runs at high speed, and accordingly, the consumption of power is big, and there is a limit to the distance that may be driven on a single charge. To compensate for this, a large-capacity battery needs to be used.

On the other hand, in an in-wheel motor system in which an electric motor directly drives a wheel hub, durability of the electric motor is a problem because a road impact occurred during vehicle driving is directly transmitted to the electric motor.

In addition, since the unsprung mass of a suspension device increases due to the increase in the size and weight of the electric motor, the in-wheel motor system also has the disadvantage of deteriorated ride comfort.

The above information disclosed in this Background section is only for enhancement of understanding of the background of the invention, and therefore it may contain information that does not form the prior art that is already known in this country to a person of ordinary skill in the art.

### [Disclosure]

### [Technical Problem]

An embodiment of the present invention provides a compact power transmission device installable in a space within a wheel hub by reducing the size of a reducer device and an electric motor, and simultaneously, provides a high-efficiency power transmission device capable of satisfying launch performance and high-speed driving performance even with the small-capacity electric motor by using the reducer device of a simple configuration.

An embodiment of the present invention provides a power transmission device capable of improving durability by minimizing the impact of a road surface acting on an electric motor, and improving the ride comfort of the vehicle by reducing the weight of a wheel driving device.

### [Technical Solution]

A power transmission device according to a first embodiment of the present invention may include a power portion including a power generating portion including a power source generating power, and a fixing portion extending from the power generating portion in an axial direction, a driving member operatively connected to the power source and including a driving gear, a driven member including a driven gear engaged with the driving gear, a rotating member coupled to the driven member and rotating with the driven member, and an output member having a rotating wheel mounted on the output member, defining an axial width, coupled to the rotating member, and rotating with the rotating member, wherein the power source may include a power source shaft, and the power source shaft may be disposed in a range of -25 ° to 25 ° with respect to a radial direction of the rotating wheel. Accordingly, the power source of a relatively large output may be disposed within a narrow space of the output member. In addition, appropriate reduction may be implemented through the driving gear and the driven gear engaged with each other. Since the reducer device having such a simple configuration is used, power transmission efficiency may be increased and simultaneously, a compact power transmission device may be implemented.

The power generating portion and the driving member may be disposed in the axial width defined by the output member.

The power generating portion and the fixing portion may be integrally formed.

A power transmission device according to a second embodiment of the present invention may include a power portion including a power generating portion including a power source generating power, and a fixing portion extending from the power generating portion in an axial direction, a driving member operatively connected to the power source and including a driving gear, a driven member including a driven gear engaged with the driving gear, and a rotating member coupled to the driven member, rotating with the driven member, having a rotating wheel mounted on the rotating member, and defining an axial width, wherein the power source may include a power source shaft, and the power source shaft may be disposed in a range of -25 ° to 25 ° with respect to a radial direction of the rotating wheel. Accordingly, the power source of a relatively large output may be disposed within a narrow space of the rotating member. In addition, appropriate reduction may be implemented through the driving gear and the driven gear engaged with each other. Since the reducer device having such a simple configuration is used, power transmission efficiency may be increased and simultaneously, a compact power transmission device may be implemented.

The power generating portion and the driving member may be disposed in the axial width defined by the rotating member.

The power generating portion and the fixing portion may be integrally formed.

The rotating member may further include an axial portion extending in an axial direction from the rotating member in an opposite direction to the fixing portion.

A power transmission device according to a third embodiment of the present invention may include a power portion including a power generating portion including a power source generating power, and a fixing portion and a second fixing portion extending in an axial direction from the power generating portion in opposite directions from each other, a driving member operatively connected to the power source and including a driving gear, a driven member including a driven gear engaged with the driving gear, having a rotating wheel mounted on the driven member, and defining an axial width, and a rotating member coupled to the driven member and rotating with the driven member, wherein the power source may include a power source shaft, and the power source shaft may be disposed in a range of -25 ° to 25 ° with respect to a radial direction of the rotating wheel. Accordingly, the power source of a relatively large output may be disposed within a narrow space of the driven member. In addition, appropriate reduction may be implemented through the driving gear and the driven gear engaged with each other. Since the reducer device having such a simple configuration is used, power transmission efficiency may be increased and simultaneously, a compact power transmission device may be implemented.

The power generating portion and the driving member may be disposed in the axial width defined by the driven member.

The power generating portion, the fixing portion, and the second fixing portion may be integrally formed.

According to the first to third embodiments of the present invention, the driving member may further include a driving shaft operatively connected to the power source shaft, and a central axis of the driving shaft and a central axis of the power source shaft may be arranged coaxially or parallel to each other.

According to the first and second embodiments of the present invention, the driven member may further include a mounting portion surrounding at least a part of the fixing portion at an outside in the radial direction, and a connecting portion connecting the driven gear and the mounting portion, wherein a bearing may be mounted between the mounting portion and the fixing portion.

A braking device may be mounted on the connecting portion or the mounting portion.

According to the first embodiment of the present invention, the power transmission device may further include a second fixing portion extending in the axial direction from the power generating portion in an opposite direction to the fixing portion.

The rotating member may further include a second mounting portion surrounding at least a part of the second fixing portion at an outside in the radial direction, and a bearing may be mounted between the second mounting portion and the second fixing portion.

According to the second embodiment of the present invention, the power transmission device may further include a bearing support portion surrounding the shaft portion at an outside of the shaft portion in the radial direction, and a bearing may be mounted between the shaft portion and the bearing support portion.

According to the third embodiment of the present invention, the driven member may further include a mounting portion surrounding at least a part of the second fixing portion at an outside in the radial direction, the rotating member may further include a second mounting portion surrounding at least a part of the fixing portion at an outside in the radial direction, and bearings may be respectively mounted between the mounting portion and the second fixing portion and between the second mounting portion and the fixing portion.

A braking device may be mounted on the rotating member.

According to an embodiment of the present invention, most of the components of the power transmission system may be mounted within the axial width by moving mounting positions of the bearing and the braking device to the outside of the axial width. Accordingly, a compact power transmission device capable of minimizing interference with chassis parts of a vehicle may be implemented.

According to the first to third embodiments of the present invention, the inner space may be formed by coupling of the driven member and the rotating member, the power generating portion and the driving member may be disposed in the inner space, and a lubricant may be filled in the inner space.

The driven gear may be located at least partially within the lubricant. Accordingly, when the driven gear rotates, the driven gears may pump up the lubricant, thereby improving the lubrication of the gear and the cooling performance of the electric motor.

According to the first to third embodiments of the present invention, the power generating portion may further include a detection portion detecting data for controlling a power source, and a control unit controlling the power source based on the data detected by the detection portion.

The power generating portion may further include a cooling portion formed around the power source.

In some aspects, the power generating portion may further include a transmission portion changing the rotational speed of the power generated by the power generating portion and transmitting the power to the driving member.

In some aspects, the power generating portion may further include a direction changing portion changing the rotational direction of the power generated by the power generating portion and transmitting the power to the driving member.

A part or all of the power generating portion may be integrally formed as a single module. By integrally forming some or all of the components constituting the power generating portion as a single module, manufacturing cost may be lowered and assembly time of the power transmission device may be shortened in an assembly line.

An electric wire electrically connected to the control unit may be buried in the fixing portion. In addition, a cooling medium passage fluidly connected to the cooling portion may be formed in the fixing portion.

According to the third embodiment of the present invention, the electric wire and the cooling medium passage may be formed in the second fixing portion.

### [Advantageous Effects]

According to an embodiment of the present invention, the size of the power transmission device may be reduced by arranging the shaft of the electric motor at an angle vertical or close to vertical with respect to the rotating axis of the driven member and using a pair of driving gear and driven gear engaged with each other as a reducer. Therefore, the power transmission device may be installed in a space within the width of the rotating wheel while exerting a sufficient driving force.

In addition, since the reducer device of a simple configuration is used, power transmission efficiency may be increased, and the weight of the wheel driving device may be lightened, thereby improving a riding comfort.

In addition, since the electric motor is fixed to the vehicle body or the suspension device through the fixing portion integrally extending from the power generating portion in the axial direction, the impact of the road surface applied to the electric motor may be minimized, thereby improving durability of the power transmission device.

In addition, all parts for driving/controlling/cooling the electric motor may be integrally formed in the power generating portion in which the electric motor is embedded, and thus, it is easy to install the power transmission device in the vehicle.

In addition, effects that may be obtained or predicted due to the embodiments of the present invention will be directly or implicitly disclosed in the detailed description of the embodiments of the present invention. That is, various effects expected according to the embodiments of the present invention will be disclosed within the detailed description to be described below.

### [Description of the Drawings]

Embodiments herein may be better understood with reference to the following description in conjunction with the accompanying drawings in which like reference numbers indicate the same or functionally similar elements.
FIG. 1 is a schematic cross-sectional view of a power transmission device according to an embodiment of the present invention.
FIG. 2 is a schematic cross-sectional view of a power transmission device according to another embodiment of the present invention.
FIG. 3 is a schematic cross-sectional view of a power transmission device according to another embodiment of the present invention.
FIG. 4 is a schematic cross-sectional view of a power transmission device according to another embodiment of the present invention.
FIG. 5 is a schematic cross-sectional view of a power transmission device according to another embodiment of the present invention.
FIG. 6 is a schematic cross-sectional view of a power transmission device according to another embodiment of the present invention.

It should be understood that the drawings referenced above are not necessarily drawn to scale, and present rather simplified representations of various preferred features illustrating the basic principle of the present invention. For example, certain design features of the present invention including particular dimensions, directions, locations, and shapes will be determined in part by the particular intended application and use environment.

### [Mode for Invention]

The terms used herein are for the purpose of describing specific embodiments, and are not intended to limit the present invention. As used herein, singular forms are intended to also include plural forms unless the context clearly indicates otherwise. It will also be understood that the terms "comprises" and/or "comprising, " specify the presence of mentioned features, integers, steps, actions, elements and/or components, but do not exclude the presence or addition of one or more of other features, integers, steps, actions, elements, components, and/or groups thereof. As used herein, the term "and/or" includes any one or all combinations of the associated listed items. The term "coupled" indicates a physical relationship between two components in which the components are directly connected to each other or indirectly through one or more intervening components.

The terms "coupling means" or similar terms refer to coupling at least two members to rotate together. Examples of coupling means may include, but are not limited to, bolts, nuts, welding, press fitting, bonding, splines, etc.

The "operably connected" or similar terms mean that at least two members are directly or indirectly connected to each other to transmit power. However, two operatively connected members do not always rotate at the same speed and in the same direction.

The terms "vehicle," "of a vehicle," or other similar terms used herein generally may include passenger vehicles including a sports utility vehicle (SUV), buses, trucks, and various commercial vehicles, various boats, and ships including vessels, trains, and aircraft, and may include vehicles including hybrid electric vehicles, electric vehicles, plug-in hybrid electric vehicles, hydrogen power vehicles, and other alternative fuel vehicles (e.g., fuels derived from resources other than petroleum). As referenced herein, an electric vehicle (EV), as part of its driving force, is a vehicle that has electrical power derived from a rechargeable energy storage device (e.g., one or more rechargeable electrochemical cells or other type of battery). The EV is not limited to automobiles, and may include a motorcycle, a cart, a scooter, etc. A hybrid vehicle is also a vehicle (e.g., a hybrid electric vehicle (HEV)) that has two or more power sources, e.g., gasoline-based power and electric-based power.

Additionally, it is understood that one or more of the methods below or aspects thereof may be executed by at least one or more control units (e.g. electronic control unit (ECU), etc.) or controllers. The term "control unit" or "controller" may refer to a hardware device including a memory and a processor. The memory is configured to store program instructions, and the processor is specifically programmed to execute the program instructions to perform one or more processes described in more detail below.

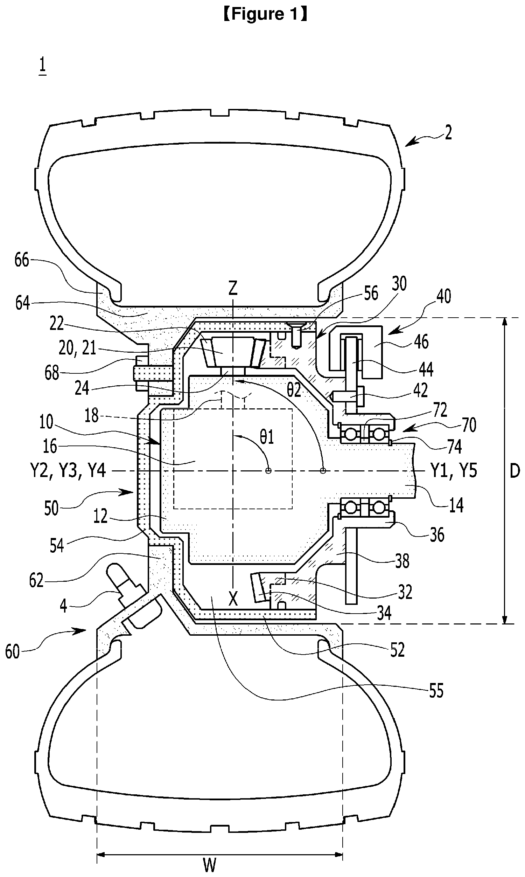

FIG. 1 is a schematic cross-sectional view of a power transmission device according to an embodiment of the present invention.

As shown in FIG. 1, a power transmission device 1 according to an embodiment of the present invention is mounted inside a wheel hub serving as an output member 60. The power transmission device 1 includes a power portion 10, a driving member 20, a driven member 30, a rotating member 50, and an output member 60. In addition, the power transmission device 1 may further include a braking device 40 and a bearing 70.

The power portion 10 includes a power generating portion 12 and a fixing portion 14. The power generating portion 12 and the fixing portion 14 may be integrally formed, the power generating portion 12 is disposed in a space within the output member 60, and the fixing portion 14 extends from the power generating portion 12 in an axial direction and protrudes to the outside the space within the output member 60. The fixing portion 14 protruding to the outside the space within the output member 60 is fixedly connected to a vehicle chassis or a suspension device.

The power generating portion 12 generates power for driving a vehicle, and includes a power source 16 therein. The power source 16 may be an electric motor including, but is not limited to, a stator that generates a magnetic field, a rotor that rotates by the magnetic field generated by the stator, and a power source shaft 18 that is fixed to the rotor and rotates together with the rotor to output power. The power source shaft 18 is rotatably disposed with respect to the power generating portion 12.

The power source 16 and/or the power source shaft 18 may be arranged in a radial direction or inclined in a range of -25 ° to 25 ° with respect to the radial direction. That is, a central axis X of the power source 16 and/or the power source shaft 18 may be disposed at a right angle or an angle θ1 close to the right angle with respect to a central axis Y1 of the driven member 30, a central axis Y2 of the rotating member 50, a central axis Y3 of the output member 60, a central axis Y4 of a rotating wheel 2, and/or a central axis Y5 of the fixing portion 14. For example, depending on the size of the power source 16, the angle θ1 may be disposed in a range of 90 ° ± 25 °, and when the power source 16 of a high torque is required, since the diameter of an electric motor increases, the angle θ1 may be arranged in a range of 90 ° ± 15 °.

The central axis Y1 of the driven member 30, the central axis Y2 of the rotating member 50, the central axis Y3 of the output member 60, the central axis Y4 of the rotating wheel 2, and/or the central axis Y5 of the fixing portion 14 may be the same axis or disposed parallel to each other.

Typically, since an inner diameter D of the output member 60 is large compared to the axial width W of the output member 60, when the power source shaft 18 is disposed to be inclined in a range of -25 ° to 25 ° with respect to the radial direction, the power source 16 of a larger capacity may be disposed in a space within the output member 60. In addition, the power source shaft 18 may be disposed to be inclined in a range of -25 ° to 25 ° with respect to the radial direction, thereby preventing the power portion 10 from protruding to the outside the space of the output member 60. Accordingly, interference between other parts of the vehicle and the power portion 10 may be prevented.

In an embodiment, one end of the fixing portion 14 is integrally formed with the power generating portion 12 and the other end thereof extends in the axial direction and protrudes to the outside the space within the output member 60. The other end of the fixing portion 14 may be fixed to a vehicle body (e.g., a chassis) or a suspension device. The diameter of the fixing portion 14 is smaller than the diameter of the power generating portion 12 so that a space for mounting a bearing 70 and a braking device 40 may be provided. In another embodiment, the power generating portion 12 and the fixing portion 14 may be manufactured of different materials and coupled to each other.

When the power generating portion 12 is fixed to the chassis or the suspension device through the fixing portion 14, the impact from a road surface during vehicle driving or the wheel impact during sudden acceleration and sudden braking is not directly transferred to the power generating portion 12 but is transferred to the chassis or the suspension device through the output member 60, the rotating member 50, the driven member 30, the bearing 70, and/or the fixing portion 14, and thus, the durability of the electric motor and related parts may be improved.

In addition, heat generated by the power generating portion 12 is transferred to the outside of the power transmission device 1 through the fixing portion 14, and thus, the cooling performance of the power generating portion 12 may be improved. That is, the fixing portion 14 may serve as a heat transfer medium.

The driving member 20 is disposed outside the power generating portion 12 in the radial direction and includes a driving gear 21 and a driving shaft 24. The driving shaft 24 is integrally formed with the power source shaft 18, directly connected to the power source shaft 18, or operatively connected to the power source shaft 18 to receive power generated by the power source 16. In an example, the central axis X of the power source shaft 18 and a central axis Z of the driving shaft 24 may be arranged coaxially or parallel to each other. Accordingly, the central axis Z of the driving shaft 24 may be disposed at a right angle or an angle θ2 close to the right angle with respect to the central axis Y1 of the driven member 30, the central axis Y2 of the rotating member 50, the central axis Y3 of the output member 60, the central axis Y4 of the rotating wheel 2, and/or the central axis Y5 of the fixing portion 14. For example, the angle θ2 may be in a range of 90 ° ± 25 °, but is not limited thereto.

The driving gear 21 transmits the power of the power source 16 transmitted through the driving shaft 24 to the driven member 30. In an example, the driving gear 21 may be formed as a pinion gear having a relatively small diameter. A driving tooth 22 is formed on the outer circumferential surface of the pinion gear to be engaged with the driven member 30 in the axial direction.

The driven member 30 includes a driven gear 32 and a driven tooth 34 formed on the outer circumferential surface of the driven gear 32, and the driving tooth 22 is engaged with the driven tooth 34 and transfers power of the driving member 20 to the driven member 30.

In an example, the driven member 30 includes a driven gear 32 on one side in the axial direction, a mounting portion 36 on the other side in the axial direction, and a connecting portion 38. The driven gear 32 may be manufactured separately and coupled to the connecting portion 38 or integrally formed with the mounting portion 36 and the connecting portion 38.

The driven gear 32 surrounds at least a part of the power generating portion 12 outside the power generating portion 12 in the radial direction within the space of the output member 60. The driven tooth 34 is formed on one end of the driven gear 32, and the driven tooth 34 is axially engaged with the driving tooth 22. Accordingly, the driven member 30 rotates by receiving power from the driving member 20 and transmits the power to the rotating member 50. In addition, since the diameter of the driven gear 32 is greater than the diameter of the driving gear 21, the rotational speed thereof is reduced during a process of transferring the power from the driving member 20 to the driven member 30. That is, according to an embodiment of the present invention, a reduction ratio required for start or high-speed driving of the vehicle may be obtained through the driving member 20 and the driven member 30 engaged with each other. Therefore, the compact and lightweight power transmission device 1 may be implemented owing to a reducer device of a simple structure including only a pair of gears engaged with each other.

The driving gear 21 and the driven gear 32 may be a pair of bevel gears, spiral bevel gears, hypoid gears, internal gears, etc. As described above, the power transmission device 1 according to the embodiment of the present invention may obtain a required reduction ratio with only a pair of gears, thereby obtaining higher power transmission efficiency than a wheel driving system using a planetary gear and/or a multi-stage reducer.

The mounting portion 36 surrounds at least a part of the fixing portion 14 outside the fixing portion 14 in the radial direction. A diameter of the mounting portion 36 may be smaller than the diameter of the driven gear 32. The mounting portion 36 is separated from the fixing portion 14 and surrounds at least a part of the fixing portion 14, and thus, the bearing 70 may be installed between the inner circumferential surface of the mounting portion 36 and the outer circumferential surface of the fixing portion 14. The number and size of the bearings 70 may be appropriately determined by a designer. In the example shown in FIG. 1, two bearings 70 are used, and a spacer 72 is disposed between the two bearings 70. In addition, in order to fix the position of the bearing 70, a stepped portion bent toward the inside of the radius may be formed on the other end of the mounting portion 36.

In addition, if necessary, the position of the bearing 70 may be fixed through a snap ring 74 installed on the mounting portion 36 and/or the fixing portion 14.

The connecting portion 38 connects the driven gear 32 and the mounting portion 36 having different diameters. The shape of the connecting portion 38 may be determined according to the shape of the power generating portion 12. The power generating portion 12 fixed to the vehicle body or the suspension system and the connecting portion 38 rotating by receiving power are spaced apart from each other.

When power is received from the driving member 20, the driven member 30 rotates with respect to its central axis Y1. The central axis Y1 of the driven member 30 may be coincident with, coaxial with, or parallel to the central axis Y5 of the fixing portion 14.

The braking device 40 may be mounted on the driven member 30 or the rotating member 50 and may include a braking disc 44 and a pair of calipers 46. In an example, the braking device 40 may be mounted on the other side of the connecting portion 38 through a coupling means 42. That is, the braking disc 44 is mounted on the other surface of the connecting portion 38 through the coupling means 42 and rotates together with the driven member 30, and the pair of calipers 46 are respectively disposed on both sides of the braking disc 44. The pair of calipers 46 move toward each other toward the braking disc 44 to interfere with the rotation of the braking disc 44, thereby implementing braking. The mounting position of the braking device 40 is not limited to the connecting portion 38. For example, the braking device 40 may be mounted on the mounting portion 36. In another example, the braking device 40 may be mounted on the rotating member 50 (e.g., a disc portion 54, etc.) instead of the driven member 30. Also, the braking device 40 may be a disc brake or a drum brake.

The rotating member 50 is operatively connected to the driven member 30 to receive power from the driven member 30 and/or the driven gear 32. The rotating member 50 has a cylindrical shape with one side closed and the other side open, and surrounds at least a part of the power generating portion 12, the driving member 20 and/or the driven member 30. The rotating member 50 includes a cylindrical portion 52 and the disc portion 54. The cylindrical portion 52 and the disc portion 54 may be integrally formed.

The cylindrical portion 52 extends in the axial direction, one end of the cylindrical portion 52 in the axial direction is spaced apart from the driving member 20 in the radial direction, and the other axial end of the cylindrical portion 52 in the axial direction is coupled to the driven member 30 and/or the driven gear 32 through a coupling means 56.

The disc portion 54 blocks one surface of the cylindrical portion 52 to prevent foreign substances from entering the rotating member 50. In addition, a coupling means 68 for coupling with the output member 60 may be formed integrally with the disc portion 54 or provided separately.

Since the rotating member 50 is operatively connected to the driven member 30 through the coupling means 56, when the driven member 30 rotates, the rotating member 50 also rotates with respect to its central axis Y2. At this time, the central axis Y1 of the driven member 30 and the central axis Y2 of the rotating member 50 are coincident with each other or arranged coaxially.

An inner space 55 is formed in the power transmission device 1 by coupling of the driven member 30 and the rotating member 50. A part of the power portion 10, the driving member 20, and the fixing portions 14 may be disposed in the inner space 55.

In an embodiment, at least a part of the power portion 10 and/or the power generating device 12 may be installed on an inner diameter portion of the driven gear 32.

In an embodiment, at least a part of the power portion 10 and/or the power generating device 12 may be disposed inside the driven member 30.

The output member 60 is operatively connected to the rotating member 50 and/or the driven member 30 to finally output power. The output member 60 may be a wheel hub. The output member 60 has a substantially cylindrical shape. The output member 60 includes a radial protruding portion 62, an axial extending portion 64, and a rotating wheel coupling portion 66. The radial protruding portion 62, the axial extending portion 64, and the rotating wheel coupling portion 66 may be integrally formed.

The axial extending portion 64 extends in the axial direction to form a space in which the power transmission device 1 may be disposed. The axial extending portion 64 defines an axial width W of the output member 60, and at least the power generating portion 12, the driving member 20, the driving gear 21, the driven member 30, the driven gear 32 and the rotating member 50 may be mostly disposed within the axial width W defined by the axial extending portion 64 and the rotating wheel coupling portion 66. Accordingly, parts disposed outside the axial width W of the output member 60 may be minimized, thereby minimizing interference between the power transmission device 1 and parts of the vehicle. Accordingly, it is very easy to mount the power transmission device 1 on the chassis of the vehicle or vehicle body.

The radial protruding portion 62 protrudes to the inside of the radius from one end of the axial extending portion 64 and is coupled to the rotating member 50 through a coupling means 68.

The rotating wheel coupling portion 66 protrudes to the outside in the radial direction from both ends of the axial extending portion 64 in the axial direction. The rotating wheel 2 is coupled to the rotating wheel coupling portion 66. The rotating wheel 2 may be a rubber tire, a urethane wheel, etc.

Since the output member 60 is operatively connected to the rotating member 50 and/or driven member 30 through the coupling means 68, rotation of the rotating member 50 and/or driven member 30 also results in rotation of the output member 60 with respect to its central axis Y3. At this time, the central axis Y2 of the rotating member 50 and the central axis Y3 of the output member 60 may be coincident with, arranged coaxially, or parallel to each other.

In an example, a coupling means 68 for coupling with the output member 60 may be provided in the driven member 30 and the output member 60 may be driven through the driven member 30. In this example, one end of the rotating member 50 coupled to the driven member 30 may be rotatably installed on the fixing portion 14 through the bearing 70.

An air injection device 4 for injecting air into the rotating wheel 2 may be mounted on the output member 60.

In an embodiment, the rotating member 50 and the output member 60 may be integrally formed.

In an embodiment, a Hall sensor, a resolver, and/or a motor driver may be embedded in the power portion 10.

In an embodiment, a space for cooling an electric motor may be provided in the power generating device 12 and the fixing portion 14.

In an embodiment, a space for arranging electric wires for power/control/communication of the electric motor may be provided in the power portion 10 and the fixing portion 14.

In an embodiment, the braking device 40 may be disposed in the inner space 55. In this case, the braking device 40 may be a wet multi-plate brake.

In an embodiment, the driven gear 32 is manufactured separately from the driven member 30, and an additional reducer device may be installed between the driven gear 32 and the driven member 30. In this case, the reducer device may be a planetary gear.

In an embodiment, the power of the power source shaft 18 may be transmitted to the driving shaft 24 through an additional transmission device.

In an embodiment, the power source shaft 18 may be disposed horizontally, vertically, or at any angle with respect to a road surface. That is, the angle between the central axis X of the power source shaft 18 and the direction of gravity may be -180 ° to 180 °.

In an embodiment, the driven gear 32 may be disposed vertically with respect to the road surface. That is, the driven tooth 34 may be disposed on a plane in vertical with respect to the road surface.

In an example, the inner space 55 may be filled with a lubricant O for lubrication of components of the power transmission device 1.

In an example, at least a part of the driven gear 32 and/or the driving gear 21 may be arranged to be submerged in the lubricant O.

In an example, a sensing portion and/or a control portion of the electric motor may be arranged not to be submerged in the lubricant O.

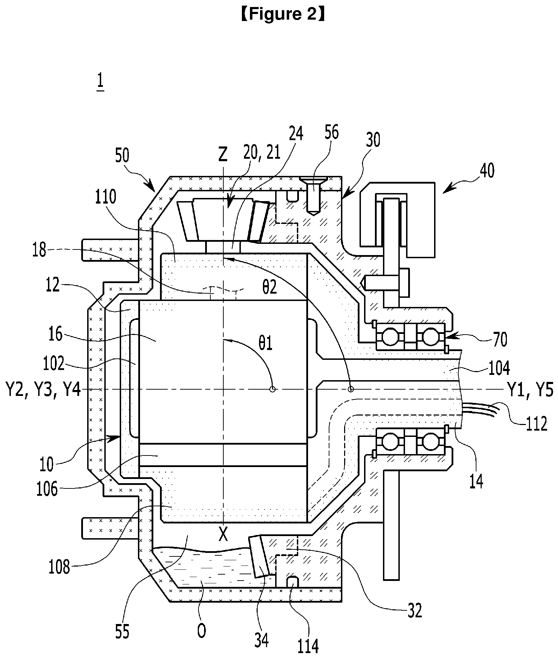

FIG. 2 is a schematic cross-sectional view of a power transmission device according to another embodiment of the present invention.

As shown in FIG. 2, the power transmission device 1 according to another embodiment of the present invention includes the power portion 10, the driving member 20, the driven member 30, the braking device 40, the rotating member 50, the output member 60, and the bearing 70. For convenience of description, the output member 60 is omitted in FIG. 2. However, it will be understood by those skilled in the art that the output member 60 shown in FIG. 1 may be equally or similarly applied to the power transmission device 1 shown in FIG. 2. In addition, descriptions of components of the power transmission device 1 according to another embodiment of the present invention that are the same as or functionally similar to the components of the power transmission device 1 according to an embodiment of the present invention are omitted or briefly given.

The power portion 10 includes the power generating portion 12 and the fixing portion 14. Some or all of the power generating portion 12 and the fixing portion 14 may be integrally formed.

The power generating portion 12 includes a power source 16, a transmission portion 110, a detection portion 106, and a control unit 108. Some or all of the power source 16, the transmission portion 110, the detection portion 106, and the control unit 108 may be integrally formed as a single module. As a result, the manufacturing cost of the parts may be reduced and the assembly time in an assembly line may be shortened.

The power source 16 may be an electric motor and includes a power source shaft 18. At least a part of the power source 16 and/or the power generating portion 12 may be disposed inside the driven member 30 in a radial direction, and the power source shaft 18 may be disposed in the radial direction or inclined in a range of -25 ° to 25 ° with respect to the radial direction. That is, the central axis X of the power source 16 may be disposed at a right angle or the angle θ1 close to the right angle with respect to the central axis Y1 of the driven member 30, the central axis Y2 of the rotating member 50, the central axis Y3 of the output member 60, the central axis Y4 of the rotating wheel 2, and/or the central axis Y5 of the fixing portion 14. For example, depending on the size of the power source 16, the angle θ1 may be disposed in aa range of 90 ° ± 25 °, and when the power source 16 of a high torque is required, since the diameter of an electric motor increases, the angle θ1 may be arranged in a range of 90 ° ± 15 °.

The transmission portion 110 may be operatively connected to the power source shaft 18, and convert the rotational speed of power received through the power source shaft 18 and transfer the rotational speed to the driving shaft 24.

The central axis Z of the driving shaft 24 may be disposed at a right angle or the angle θ2 close to the right angle with respect to the central axis Y1 of the driven member 30, the central axis Y2 of the rotating member 50, the central axis Y3 of the output member 60, the central axis Y4 of the rotating wheel 2, and/or the central axis Y5 of the fixing portion 14. For example, the angle θ2 may be in a range of 90 ° ± 25 °.

In an example, the transmission portion 110 may be a gear box including a plurality of gears. In another example, the transmission portion 110 may include a plurality of gears and a shifting module that controls a connection between the plurality of gears to implement two or more gear ratios.

The detection portion 106 detects data for controlling the power source 16 and the transmission portion 110. For example, the detection portion 106 may include a speed sensor and/or a position sensor detecting the rotational speed and position of the power source 16, and a temperature sensor detecting the temperature of the power source 16 and the temperature of the lubricant O.

The control unit 108 controls the operation of the power source 16 and/or the transmission portion 110 based on the data detected by the detection portion 106. For example, the control unit 108 includes at least one of a motor driver for driving the power source 16, a converter for converting power of a battery into power required for driving the power source 16, an inverter and/or a capacitor, and the detection portion 106, and a communication module for communicating with an external control unit. The control unit 108 may be formed as a printed circuit board (PCB).

The control unit 108 may receive signals/commands for performing vehicle attitude control, wheel slip control, torque vectoring control, regenerative braking, etc. from a vehicle control unit (VCU) and control a number of revolutions and torque of an electric motor. In addition, the control unit 108 may perform control to protect the electric motor when the current or temperature of the electric motor excessively rises, and may provide information about this to the VCU.

The power generating portion 12 may further include a cooling portion 102 formed therein. The cooling portion 102 may be formed around the power source 16 to cool the power source 16. The cooling portion 102 may be formed as a water jacket, an oil jacket, or an air jacket.

The fixing portion 14 extends from the power generating portion 12 in the axial direction and is fixed to a vehicle body or a suspension device. A cooling medium passage 104 fluidly connected to the cooling portion 102 may be formed in the fixing portion 14, and an electric wire 112 electrically/signally connected to the control unit 108 may be buried therein. Through the electric wire 112, the control unit 108 may communicate with an external control unit and receive power from a battery.

The electric wire 112 connected to the control unit 108 is buried inside the fixing portion 14 so that the electric wire 112 may be prevented from interfering with rotating parts in the power transmission device 1, and avoids exposure/contact with hot parts or the lubricant O so that reliability of the control unit 108 may be increased.

The driving member 20 includes a driving shaft 24 operatively connected to the transmission portion 110. The rotational speed of power generated by the power source 16 is changed by the transmission portion 110, and the power of the changed rotational speed is transferred to the driving shaft 24. Here, the central axis X of the power source shaft 18 and the central axis Z of the driving shaft 24 may be arranged coaxially or parallel to each other.

The driven member 30 is engaged with the driving member 20 in the axial direction to receive power from the driving member 20. As mentioned above, the driving gear 21 of the driving member 20 and the driven gear 32 of the driven member 30 are engaged with each other so that the rotational speed of the driving member 20 is reduced and transferred to the driven member 30.

The rotating member 50 is operatively connected to the driven member 30 and/or the driven gear 32 through the coupling means 56 to receive power from the driven member 30. The lubricant O for lubricating and cooling components of the power transmission device 1 may be injected into the rotating member 50. Also, some of a plurality of driven teeth 34 may be immersed in the lubricant O. Accordingly, when the driven member 30 rotates, some of the driven teeth 34 may pump up the lubricant O inside the rotating member 50 to improve lubrication and cooling efficiency. A sealing means 114 may be disposed between the rotating member 50 and the driven member 30 to prevent the lubricant O in the rotating member 50 from leaking to the outside of the rotating member 50. The sealing means 114 may be a rubber seal, a liquid gasket, etc.

The lubricant O may help suppress noise generated by the power transmission device 1. The lubricant O may be transmission oil, grease, etc.

According to another embodiment of the present invention, by integrally forming the cooling portion 102, the power source 16, the transmission portion 110, the detection portion 106, and at least a part of the control unit 108 as one module, a compact power transmission device 1 may be implemented. Accordingly, most of the power transmission device 1 may be disposed within the axial width W of the output member 60 and the inner diameter D of the output member 60, and interference with vehicle parts may be prevented. In addition, the cooling medium passage 104 for cooling the power transmission device 1 and the electric wire 112 for controlling the power transmission device 1 may be installed in the fixing portion 14 protruding to the outside the axial width W of the output member 60, and thus, vehicle mountability, assemblability, maintainability, etc. may be improved.

In addition, the control unit 108 for controlling the electric motor is provided inside the power transmission device 1, which shares a role with, for example, a vehicle control unit (VCU), etc., thereby increasing efficiency of the overall control system.

According to another embodiment of the present invention, driving force necessary for driving a wheel may be obtained only with a reducer device including a pair of gears, for example, the driving gear 21 and the driven gear 32.

In an embodiment, one end of the power portion 10 may be supported on the rotating member 50 through a load support means. The load support means may be a bearing, etc.

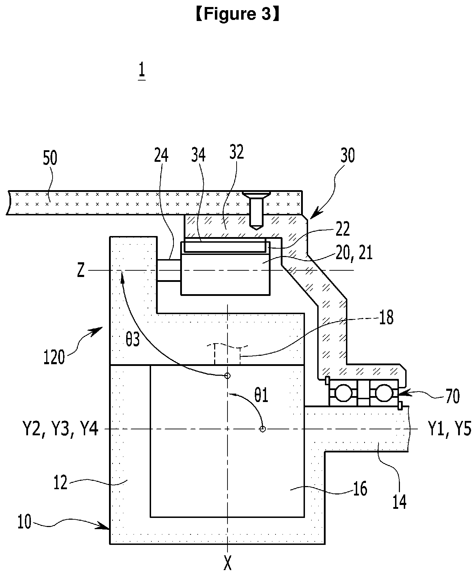

FIG. 3 is a schematic cross-sectional view of a power transmission device according to another embodiment of the present invention.

As shown in FIG. 3, the power transmission device 1 according to another embodiment of the present invention includes the power portion 10, the driving member 20, the driven member 30, the braking device 40, the rotating member 50, the output member 60, and the bearing 70. For convenience of description, the braking device 40 and the output member 60 are omitted in FIG. 3. However, it will be understood by those skilled in the art that the braking device 40 and the output member 60 shown in FIG. 1 may be equally or similarly applied to the power transmission device 1 shown in FIG. 3. In addition, descriptions of components of the power transmission device 1 according to another embodiment of the present invention that are the same as or functionally similar to the components of the power transmission device 1 according to an embodiment of the present invention are omitted or briefly given.

The power portion 10 includes the power generating portion 12 and the fixing portion 14, and the power generating portion 12 and the fixing portion 14 may be integrally formed.

The power generating portion 12 includes a power source 16 and a direction changing portion 120. The power source 16 or the power generating portion 12 and the direction changing portion 120 may be integrally formed as a single module.

The power source 16 may be an electric motor and includes the power source shaft 18. The power source shaft 18 may be disposed in a radial direction or inclined in a range of -25 ° to 25 ° with respect to the radial direction. That is, the power source shaft 18 may be disposed at a right angle or the angle θ1 close to the right angle with respect to the central axis Y1 of the driven member 30, the central axis Y2 of the rotating member 50, the central axis Y3 of the output member 60, the central axis Y4 of the rotating wheel 2, and/or the central axis Y5 of the fixing portion 14. For example, depending on the size of the power source 16, the angle θ1 may be disposed in aa range of 90 ° ± 25 °, and when the power source 16 of a high torque is required, since the diameter of an electric motor increases, the angle θ1 may be arranged in a range of 90 ° ± 15 °.

The direction changing portion 120 is operatively connected to the power source shaft 18, and may convert the rotational speed and/or the direction of the rotating shaft of power received through the power source shaft 18 and transfer the rotational speed and/or the direction to the driving shaft 24. In an example, the direction changing portion 120 may be a gear box including a plurality of gears, and the plurality of gears may include gears capable of changing and transferring the direction of the rotating shaft, such as a bevel gear. In another example, the direction changing portion 120 may include a shifting module that controls a connection between the plurality of gears to implement two or more gear ratios.

The driving member 20 includes the driving shaft 24 operatively connected to the direction changing portion 120. The rotational speed and the direction of the rotating shaft of power generated by the power source 16 are changed by the direction changing portion 120, and the power of the changed rotational speed and direction of the rotating shaft is transferred to the driving shaft 24. Here, an angle θ3 between the central axis X of the power source shaft 18 and the central axis Z of the driving shaft 24 may be in a range of 90 ° ± 25 °.

The driven member 30 is disposed outside the driving member 20 in the radial direction, and is engaged with the driving member 20 in the radial direction to receive power from the driving member 20. By adjusting the number of driving teeth 22 of the driving member 20 and the number of driven teeth 34 of the driven member 30, the rotational speed of the driving member 20 may be reduced and transferred to the driven member 30. The driving gear 21 and the driven gear 32 may be a pair of internal gears.

According to another embodiment of the present invention, by disposing the direction changing portion 120 between the power source 16 and the driving member 20, the compact power transmission device 1 may be implemented while changing a power transmission direction according to the arrangement of the driven member 30 and the driving member 20. As above, the design freedom of the power transmission device 1 may be increased by applying various types of gear boxes such as the direction changing portion 120 capable of changing the direction of the rotating shaft.

In an embodiment, the rotating member 50 and the driven member 30 may be integrally formed.

In an embodiment, the driven gear 32 may be manufactured separately and coupled with the driven member 30 and/or the rotating member 50.

In an embodiment, a transmission mechanism by a solenoid, an electric motor, etc. may be integrally provided with the power generating portion 12 in the direction changing portion 120.

In an embodiment, the central axis Y5 of the fixing portion 14 may be disposed parallel or close to parallel to a road surface.

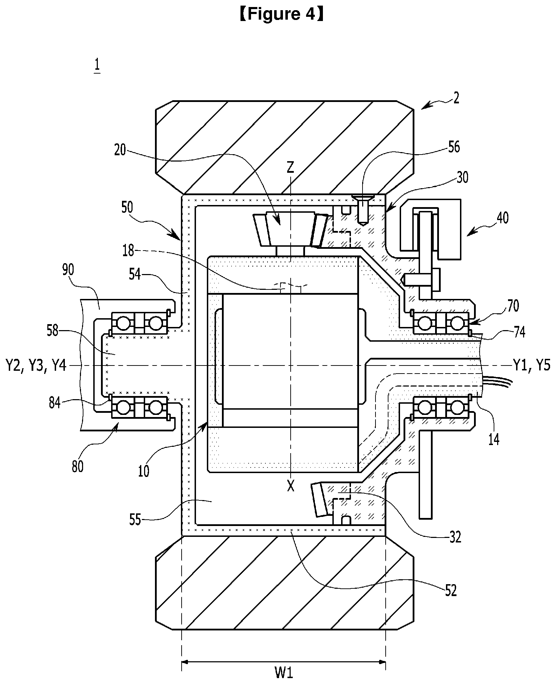

FIG. 4 is a schematic cross-sectional view of a power transmission device according to another embodiment of the present invention.

As shown in FIG. 4, the power transmission device 1 according to another embodiment of the present invention includes the power portion 10, the driving member 20, the driven member 30, the braking device 40, the rotating member 50, the bearing 70, and the rotating wheel 2. For convenience of description, descriptions of components of the power transmission device 1 according to another embodiment of the present invention that are the same as or functionally similar to the components of the power transmission device 1 according to an embodiment of the present invention are omitted or briefly given.

In the power transmission device 1 according to another embodiment of the present invention, the overall shape of the rotating member 50 is similar to the shape of the rotating member 50 shown in FIGS. 1 and 2, but the power transmission device 1 further includes a shaft portion 58 protruding to one side in the axial direction from the disc portion 54 of the rotating member 50. The shaft portion 58 is for installing an additional load support means for distributing and supporting the load acting on the power transmission device 1. To this end, an additional bearing 80 may be installed on an outer diameter portion of the shaft portion 58, and a bearing support portion 90 surrounding at least a part of the bearing 80 and the shaft portion 58 is provided in an outer diameter portion of the bearing 80.

The bearing 80 may be fixed to the shaft portion 58 and the bearing support portion 90 by a fixing means such as a snap ring 84, etc. The number and size of the bearings 80 may be appropriately determined by a designer.

In an example, the shaft portion 58 may be provided on the driven member 30. In this example, one end of the rotating member 50 may be rotatably installed on the fixing portion 14 through the bearing 70.

The power transmission device 1 according to another embodiment of the present invention supports the load of a vehicle or the impact of a road surface on both sides of a wheel driving device through the bearings 70 and 80 installed on both sides of the power transmission device 1 in the axial direction, and thus, durability of the power transmission device 1 may be further improved.

The power transmission device 1 according to another embodiment of the present invention does not include the output member 60. According to the power transmission device 1 shown in FIG. 4, the rotating member 50 instead of the output member 60 may finally output power. For example, as shown in FIG. 4, the rotating wheel 2 may be directly coupled onto the rotating member 50. In this case, at least a part of the power generating portion 12, the driving member 20, and the driven member 30 may be mostly disposed within an axial width W1 of the rotating member 50.

In the present embodiment, the rotating wheel 2 may be a solid tire or a similar wheel.

According to the present embodiment, the length of the power generating portion 12 in the direction of the central axis X may be set smaller than the inner diameter of the driven gear 32.

In an embodiment, the driven gear 32 and the driven member 30 may have the identical central axis and may be coaxial or parallel to the central axis of the fixing portion 14 and/or the shaft portion 58.

In an embodiment, the power source shaft 18 may be disposed horizontally, vertically, or at any angle with respect to a road surface. That is, the angle between the central axis X of the power source shaft 18 and the direction of gravity may be -180 ° to 180 °. In other words, the central axis X of the power source shaft 18 may be arbitrarily installed within a range of 360 degrees with respect to the fixing portion 14 and/or the shaft portion 58.

The power transmission device 1 may be usefully applied to a steering driving wheel having a driving force. In an example, the fixing portion 14 and the bearing support portion 90 may be used as members connected to a steering shaft.

In addition, the power transmission device 1 may be effectively applied to driving wheels of a two-wheeled vehicle, etc.

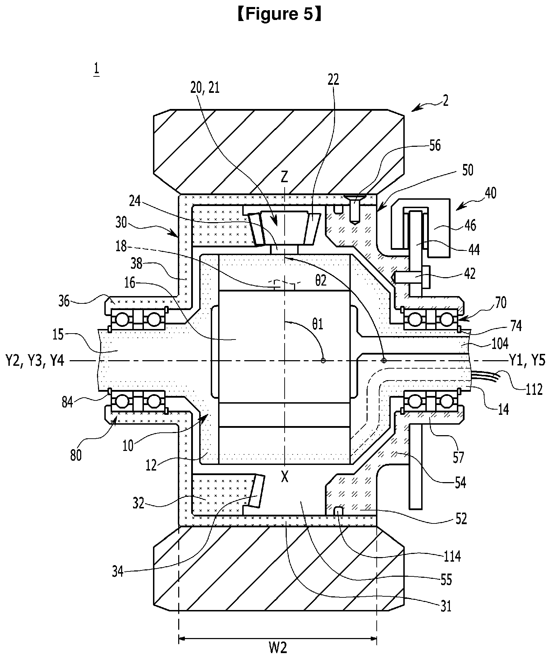

FIG. 5 is a schematic cross-sectional view of a power transmission device according to another embodiment of the present invention.

As shown in FIG. 5, the power transmission device 1 according to another embodiment of the present invention includes the power portion 10, the driving member 20, the driven member 30, the braking device 40, the rotating member 50, the bearing 70, and the rotating wheel 2. For convenience of description, descriptions of components of the power transmission device 1 according to another embodiment of the present invention that are the same as or functionally similar to the components of the power transmission device 1 according to an embodiment of the present invention are omitted or briefly given.

In the power transmission device 1 according to another embodiment of the present invention, the power portion 10 includes the power generating portion 12, the fixing portion 14, and a second fixing portion 15. The power generating portion 12, the fixing portion 14, and the second fixing portion 15 may be integrally formed, the power generating portion 12 is disposed in a space within the driven member 30, the second fixing portion 15 extends from one surface of the power generating portion 12 in the axial direction to one side in the axial direction and protrudes to the outside a space within the driven member 30, and the fixing portion 14 extends from the other surface of the power generating portion 12 in the axial direction to the other side in the axial direction and protrudes to the outside a space within the rotating member 50. The fixing portion 14 protruding to the outside the space within the rotating member 50 and the second fixing portion 15 protruding to the outside the space within the driven member 30 may be fixedly connected to a vehicle chassis or a suspension device. In addition, an additional load support means for distributing and supporting the load acting on the power transmission device 1 may be installed in the second fixing portion 15. To this end, the additional bearing 80 may be installed on an outer diameter portion of the second fixing portion 15, and may be fixed to the second fixing portion 15 and the mounting portion 36 of the driven member 30 by a fixing means such as the snap ring 84. The number and size of the bearings 80 may be appropriately determined by a designer.

The driven member 30 includes a second cylindrical portion 31, the connecting portion 38, the driven gear 32, and the mounting portion 36. The second cylindrical portion 31 extends in the axial direction to define an axial width W2 of the driven member 30, the mounting portion 36 at least partially surrounds the second fixing portion 15 so that the bearing 80 is disposed between the mounting portion 36 and the second fixing portion 15, and the connecting portion 38 connects the second cylindrical portion 31 and the mounting portion 36 having different diameters. The driven gear 32 is fixed to the inner surface of the second cylindrical portion 31 and/or the connecting portion 38, and the driven gear 32 is engaged with the driving gear 21 to receive power.

In an example, the second cylindrical portion 31, the connecting portion 38, and the mounting portion 36 may be integrally formed, and the driven gear 32 may be formed separately and attached to the second cylindrical portion 31 and/or the connecting portion 38. In another example, the second cylindrical portion 31, the connecting portion 38, the driven gear 32, and the mounting portion 36 may all be integrally formed.

The rotating member 50 is operatively connected to the driven member 30 through the coupling means 56 to receive power from the driven member 30. The rotating member 50 includes the cylindrical portion 52 coupled to the inner surface of the second cylindrical portion 31 through the coupling means 56, the disc portion 54 extending toward the inside in the radial direction from the cylindrical portion 52, and a second mounting portion 57 extending from the inner diameter end of the disc portion 54 to the other side in the axial direction and surrounding the fixing portion 14. The bearing 70 may be disposed between the fixing portion 14 and the second mounting portion 57.

In an example, the cylindrical portion 52, the disc portion 54, and the second mounting portion 57 may be integrally formed.

The power transmission device 1 according to another embodiment of the present invention does not include the output member 60. According to the power transmission device 1 shown in FIG. 5, the driven member 30 instead of the output member 60 may finally output power. For example, as shown in FIG. 5, the rotating wheel 2 may be directly coupled onto the driven member 30. In this case, at least a part of the power generating portion 12, the driving member 20, and the rotating member 50 may be mostly disposed within the axial width W2 of the driven member 30.

The power transmission device 1 according to another embodiment of the present invention supports the load of a vehicle or the impact of a road surface on both sides of a wheel driving device through the bearings 70 and 80 installed on both sides of the power transmission device 1 in the axial direction, and thus, durability of the power transmission device 1 may be further improved.

In the present embodiment, the rotating wheel 2 may be a solid tire or a similar wheel.

In an embodiment, the inner diameter portion of the mounting portion 36 of the driven member 30 is blocked, and the second fixing portion 15 does not protrude to the outside of the power transmission device 1 and may be supported by the bearing 80 within the inner space 55.

In an embodiment, the central axis Y2 of the driven gear 32 may be disposed coaxially or parallel to the fixing portion 14 and/or the second fixing portion 15.

The power source shaft 18 may be disposed horizontally, vertically, or at any angle with respect to a road surface. That is, the angle between the central axis X of the power source shaft 18 and the direction of gravity may be -180 ° to 180 °. In other words, the central axis X of the power source shaft 18 may be arbitrarily installed within a range of 360 degrees with respect to the fixing portion 14 and/or the second fixing portion 15.

The power transmission device 1 may be usefully applied to a steering driving wheel having a driving force. In an example, the fixing portion 14 and the second fixing portion 15 may be used as members connected to a steering shaft.

In addition, the power transmission device 1 may be effectively applied to driving wheels of a two-wheeled vehicle, etc.

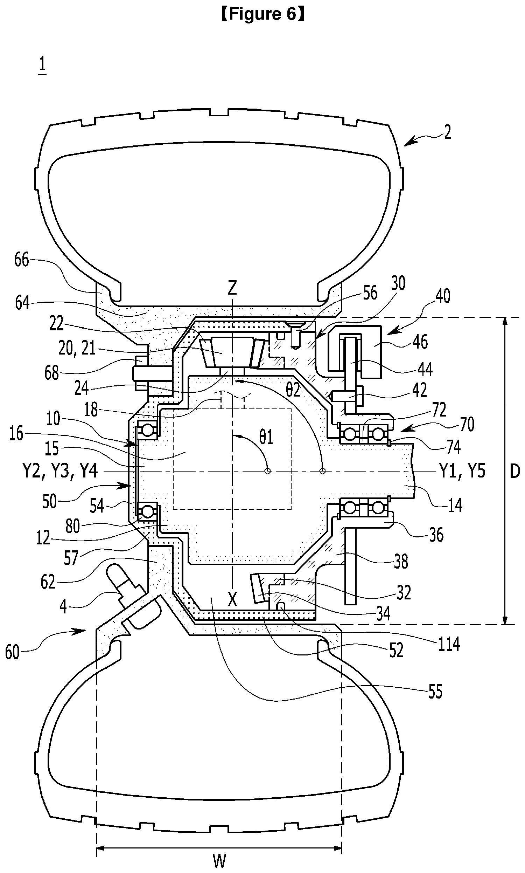

FIG. 6 is a schematic cross-sectional view of a power transmission device according to another embodiment of the present invention.

As shown in FIG. 6, the power transmission device 1 according to another embodiment of the present invention includes the power portion 10, the driving member 20, the driven member 30, the braking device 40, the rotating member 50, the output member 60, and the bearing 70. For convenience of description, descriptions of components of the power transmission device 1 according to another embodiment of the present invention that are the same as or functionally similar to the components of the power transmission device 1 according to an embodiment of the present invention are omitted or briefly given.

In the power transmission device 1 according to another embodiment of the present invention, the power portion 10 includes the power generating portion 12, the fixing portion 14, and the second fixing portion 15. The power generating portion 12, the fixing portion 14, and the second fixing portion 15 may be integrally formed, the power generating portion 12 is disposed in an inner space 55, the second fixing portion 15 extends from one surface of the power generating portion 12 in the axial direction to one side in the axial direction but is disposed in the inner space 55, and the fixing portion 14 extends from the other surface of the power generating portion 12 in the axial direction to the other side in the axial direction and protrudes to the outside the inner space 55. The fixing portion 14 protruding to the outside the inner space 55 may be fixedly connected to a vehicle chassis or a suspension device. In addition, an additional load support means for distributing and supporting the load acting on the power transmission device 1 may be installed in the second fixing portion 15. To this end, the disc portion 54 of the rotating member 50 includes a second mounting portion 57 surrounding the second fixing portion 15 outside in the radial direction, and the additional bearing 80 may be installed between the outer surface of the second fixing portion 15 and the inner surface of the second mounting portion 57, and may be supported in the axial direction by one surface of the disc portion 54 and the power generating portion 12 in the axial direction. The number and size of the bearings 80 may be appropriately determined by a designer.

The power source 16 may be an electric motor and includes the power source shaft 18. At least a part of the power source 16 and/or the power generating portion 12 may be disposed inside the driven member 30 in a radial direction, and the power source shaft 18 may be disposed in the radial direction or inclined in a range of -25 ° to 25 ° with respect to the radial direction. That is, the central axis X of the power source 16 may be disposed at a right angle or the angle θ1 close to the right angle with respect to the central axis Y1 of the driven member 30, the central axis Y2 of the rotating member 50, the central axis Y3 of the output member 60, the central axis Y4 of the rotating wheel 2, and/or the central axis Y5 of the fixing portion 14. For example, depending on the size of the power source 16, the angle θ1 may be disposed in a range of 90 ° ± 25 °, and when the power source 16 of a high torque is required, since the diameter of an electric motor increases, the angle θ1 may be arranged in a range of 90 ° ± 15 °.

The driving member 20 includes the driving shaft 24 operatively connected to the power source shaft 18. Power generated by the power source 16 is transmitted to the driving shaft 24. Here, the central axis X of the power source shaft 18 and the central axis Z of the driving shaft 24 may be arranged coaxially or parallel to each other.

The driven member 30 is engaged with the driving member 20 in the axial direction to receive power from the driving member 20. As mentioned above, the driving gear 21 of the driving member 20 and the driven gear 32 of the driven member 30 are engaged with each other so that the rotational speed of the driving member 20 is reduced and transferred to the driven member 30.

The rotating member 50 is operatively connected to the driven member 30 and/or the driven gear 32 through the coupling means 56 to receive power from the driven member 30. The lubricant O for lubricating and cooling components of the power transmission device 1 may be injected into the rotating member 50. Also, some of the plurality of driven teeth 34 may be immersed in the lubricant O. Accordingly, when the driven member 30 rotates, some of the driven teeth 34 may pump up the lubricant O inside the rotating member 50 to improve lubrication and cooling efficiency. The sealing member 114 may be disposed between the rotating member 50 and the driven member 30 to prevent the lubricant O in the rotating member 50 from leaking to the outside of the rotating member 50. The sealing means 114 may be a rubber seal, a liquid gasket, etc.

The lubricant O may help suppress noise generated by the power transmission device 1. The lubricant O may be transmission oil, grease, etc.

The output member 60 is operatively connected to the rotating member 50 and/or the driven member 30 to finally output power. The output member 60 may be a wheel hub. Since the output member 60 is operatively connected to the rotating member 50 and/or driven member 30 through the coupling means 68, rotation of the rotating member 50 and/or driven member 30 also results in rotation of the output member 60 with respect to its central axis Y3. At this time, the central axis Y2 of the rotating member 50 and the central axis Y3 of the output member 60 may be coincident with, arranged coaxially, or parallel to each other.

The power transmission device 1 according to another embodiment of the present invention supports the load of a vehicle or the impact of a road surface on both sides of a wheel driving device through the bearings 70 and 80 installed on both sides of the power transmission device 1 in the axial direction, and thus, durability of the power transmission device 1 may be further improved.

In an embodiment, the central axis Y2 of the driven gear 32 may be disposed coaxially or parallel to the fixing portion 14 and/or the second fixing portion 15.

The power source shaft 18 may be disposed horizontally, vertically, or at any angle with respect to a road surface. That is, the angle between the central axis X of the power source shaft 18 and the direction of gravity may be -180 ° to 180 °. In other words, the central axis X of the power source shaft 18 may be arbitrarily installed within a range of 360 degrees with respect to the fixing portion 14 and/or the second fixing portion 15.

The power transmission device 1 according to embodiments of the present invention has additional advantages in addition to the effects described above. For example, the weight of the power transmission device 1 may be reduced due to a small size compared to the existing wheel driving device or in-wheel motor system. Accordingly, the unsprung mass of the suspension device of the vehicle may be reduced, and a ride comfort may be improved. In addition, the relatively heavyweight power portion is fixed to the vehicle body or the suspension device, and thus, the rotational inertia of the wheel is reduced, which assists in improving the start and acceleration performance of the vehicle.

While this invention has been described in connection with what is presently considered to be practical exemplary embodiments, it is to be understood that the invention is not limited to the disclosed embodiments. On the contrary, it is intended to cover various modifications and equivalent arrangements included within the spirit and scope of the appended claims.

## Claims

1. A power transmission device comprising:
a power portion comprising a power generating portion comprising a power source generating power, and a fixing portion extending from the power generating portion in an axial direction;
a driving member operatively connected to the power source and comprising a driving gear;
a driven member comprising a driven gear engaged with the driving gear;
a rotating member coupled to the driven member and rotating with the driven member; and
an output member having a rotating wheel mounted on the output member, defining an axial width, coupled to the rotating member, and rotating with the rotating member,
wherein the power source comprises a power source shaft, and
the power source shaft is disposed in a range of -25 ° to 25 ° with respect to a radial direction of the rotating wheel.

2. The power transmission device of claim 1, wherein:
the power generating portion and the driving member are disposed within the axial width defined by the output member.

3. The power transmission device of claim 1, wherein:
the power generating portion and the fixing portion are integrally formed.

4. The power transmission device of claim 1, further comprising:
a second fixing portion extending in the axial direction from the power generating portion in an opposite direction to the fixing portion.

5. A power transmission device comprising:
a power portion comprising a power generating portion comprising a power source generating power, and a fixing portion extending from the power generating portion in an axial direction;
a driving member operatively connected to the power source and comprising a driving gear;
a driven member comprising a driven gear engaged with the driving gear; and
a rotating member coupled to the driven member, rotating with the driven member, having a rotating wheel mounted on the rotating member, and defining an axial width,
wherein the power source comprises a power source shaft, and
the power source shaft is disposed in a range of -25 ° to 25 ° with respect to a radial direction of the rotating wheel.

6. The power transmission device of claim 5, wherein:
the power generating portion and the driving member are disposed within the axial width defined by the rotating member.

7. The power transmission device of claim 5, wherein:
the power generating portion and the fixing portion are integrally formed.

8. The power transmission device of claim 5, wherein:
the rotating member further comprises an axial portion extending in the axial direction from the rotating member in an opposite direction to the fixing portion.

9. A power transmission device comprising:
a power portion comprising a power generating portion comprising a power source generating power, and a fixing portion and a second fixing portion extending in an axial direction from the power generating portion in opposite directions from each other;
a driving member operatively connected to the power source and comprising a driving gear;
a driven member comprising a driven gear engaged with the driving gear, having a rotating wheel mounted on the driven member, and defining an axial width; and
a rotating member coupled to the driven member and rotating with the driven member,
wherein the power source comprises a power source shaft, and
the power source shaft is disposed in a range of -25 ° to 25 ° with respect to a radial direction of the rotating wheel.

10. The power transmission device of claim 9, wherein:
the power generating portion and the driving member are disposed within the axial width defined by the driven member.

11. The power transmission device of claim 9, wherein:
the power generating portion, the fixing portion, and the second fixing portion are integrally formed.
